# EUROPÄISCHE PATENTANMELDUNG

(11) **EP 1 878 707 A1**
(43) Veröffentlichungstag der Anmeldung: **16.01.2008**
(21) Anmeldenummer: 07013772.4
(22) Anmeldetag: 13.07.2007
(51) Int. Cl.: C03B 33/09

(54) **Verfahren zur Erzeugung optisch wahrnehmbarer laserinduzierter Risse in sprödem Material**

(30) Priorität: 14.07.2006 DE 102006033217
(71) Anmelder: JENOPTIK Automatisierungstechnik GmbH, 07745 Jena (DE)
(72) Erfinder: Acker, Stefan, 07646 Waldeck (DE); Weisser, Jürgen, 07743 Jena (DE); Ullmann, Ronny, 07768 Altenberga (DE)
(74) Vertreter: Schaller, Renate

(57) **Zusammenfassung**

Verfahren zur Erzeugung optisch wahrnehmbarer laserinduzierter Risse in sprödem Material, bei dem eine Laserstrahlung gefolgt von einem Kühlmittelstrahl zur Oberfläche des spröden Materials relativ geführt wird, um von einem Initialriss ausgehend, eine Rissspur in das Material zu treiben und bei dem dem Kühlmittel ein Markierungsmittel beigemischt wird, welches mit der Rissausbildung in den Riss eindringt und diesen sichtbar macht.

## Beschreibung

Die Erfindung betrifft ein Verfahren zur Erzeugung optisch wahrnehmbarer laserinduzierter Risse in sprödes Material, wie es gattungsgemäß aus der DE 101 29 876 C1 bekannt ist.

Inzwischen sind Verfahren zum Thermischen Laserstrahlseparieren (TLS-Verfahren) vielfältig praktizierte Verfahren zum Trennen von sprödem Material und es gibt eine Vielzahl von Publikationen und Patenten, die ausgehend von dem in der DE-AS 12 44 346 beschriebenen Grundlagenverfahren dieses weiterentwickeln und modifizieren, um insbesondere die Qualität der Trennkante zu verbessern und den Prozess zu effektivieren.

Die verschiedenen gattungsgleichen Verfahren haben mit dem Verfahren nach der DE-AS 12 44 346 gemeinsam, dass das Material entlang der gewünschten Trennlinie durch Überstreichen mit einem Laserstrahl auf eine Temperatur unterhalb der Schmelztemperatur erwärmt wird und durch einen dem Laserstrahl folgenden Kühlmittelstrahl derart hohe thermische Spannungen entlang der Trennlinie erzeugt werden, dass ausgehend von einem Initialritz ein Riss entlang der Trennlinie (Rissspur) in das Material getrieben wird.

Abhängig von Besonderheiten der einzelnen Verfahren, sowie den Verfahrens- und Materialparametern kann der Riss insbesondere Material geringer Dicke vollständig durchtrennen oder aber nur einen Tiefenriss bilden. Eine endgültige Trennung entlang der Trennlinie erfolgt dann in der Regel durch unmittelbar anschließende oder spätere mechanische Krafteinwirkungen entlang der Rissspur, womit das Material gebrochen wird.

Da im Unterschied zu mechanischen Schneidverfahren oder Lasersublimationsverfahren kein Materialabtrag und damit auch keine Veränderung der Oberflächenstruktur erfolgt, ist die Sichtbarkeit der Trennlinie trotz der Rissausbildung sehr begrenzt.

Um eine gleichmäßige Krafteinwirkung beidseitig der Rissspur zu gewährleisten, muss eine zum Brechen vorgesehene Vorrichtung zur Rissspur ausgerichtet sein. Sofern der Brechvorgang unmittelbar an die Risserzeugung anschließt, kann die Ausrichtung grundsätzlich an der Führung des Lasers und der Kühlmitteldüse orientiert erfolgen. Vorausgesetzt, es treten keine Dejustierungen auf und der Riss wird tatsächlich immer kontinuierlich vorangetrieben, ist mit einer Bruchkante frei von Bruchfehlern zu rechnen.

Soll jedoch das Brechen erst zu einem späteren Zeitpunkt an einem vom Ort der Risserzeugung unterschiedlichen Ort erfolgen, so ist es wichtig, dass der Riss visuell sichtbar bzw. optisch detektierbar ist, um eine Brechvorrichtung oder auch andere Bearbeitungsvorrichtungen für dem Separieren vorgeordnete Verfahrensschritte, wie ein partielles Beschichten oder Bestücken, an der Rissspur ausrichten zu können.

Aus der DE 101 29 876 C1 ist ein Verfahren bekannt, mit welchem eine dauerhaft sichtbare Markierungsspur entlang einer Rissspur (hier Ritzspur genannt) in Gläsern realisiert wird, indem nach dem laserinduzierten Ritzen und vor dem Brechvorgang auf die Rissspur eine Beschichtung wenigstens teilweise aufgetragen wird. Die optische Erkennbarkeit wird dabei durch eine zu den Oberflächen der Glaselemente unterschiedlich gewählte Farbgebung der Beschichtung und/oder einer durch die Schichtdicke bedingte Oberflächenerhebung auf der Rissspur gewährleistet.

Eine Entfernung der Beschichtung, beispielsweise nach dem Brechvorgang durch Waschen der einzelnen Glaselemente ist möglich. Als Möglichkeiten für das Auftragen der Beschichtung auf die Rissspur (Auftragen einer Markierungsspur) wird vorgeschlagen entweder die gesamte Rissspur durchgängig zu beschichten oder die Beschichtung in bestimmten Abständen über die Länge der Rissspur aufzutragen, um z. B. nur Markierungspunkte zu setzen.

Gemäß der DE 101 29 876 C1 kann die Beschichtung durch eine Strahleinrichtung, einen Stift oder eine Sprüheinrichtung aufgetragen werden. Im Fall einer Strahleinrichtung erfolgt der Auftrag einer Flüssigkeit an der Rissspur, welche aushärtet.
Um eine Beschichtung durch einen Strahl aufzutragen, bedarf es wenigstens einer Strahleinrichtung mit einer Auftragsdüse. Diese ist gemäß einem beschriebenen Ausführungsbeispiel, ebenso wie die Vorrichtung zum laserinduzierten Ritzen ortsfest, sodass das Glaselement die notwendige Relativbewegung ausführt.

Nachteilig an dem beschriebenen Verfahren ist, dass es in Folge von Dejustierungen zu einem Abweichen der Markierungsspur von der Rissspur kommen kann und die Markierungsspur aufgetragen wird, unabhängig davon, ob eine Rissspur überhaupt erzeugt wurde. Der Risserzeugung nachfolgende Bearbeitungsschritte orientieren sich nicht am tatsächlichen Verlauf der Rissspur, sondern an einer Markierungsspur mit einem Sollverlauf gleich dem Sollverlauf der Rissspur, deren Vorhandensein vorausgesetzt wird. Abweichungen der Istverläufe der Markierungsspur und der Rissspur zueinander führen zu Qualitätsschwankungen von der Risserzeugung nachfolgenden Bearbeitungsschritten.

Zur Rissprüfung, insbesondere in nicht magnetisierbaren Werkstücken, wie z. B. Keramik, ist es bekannt, sogenannte Farbeindringverfahren anzuwenden. Dabei werden in an sich bekannter Weise Werkstücke für die Rissprüfung vorbereitet, indem sie mit Farbstoffen, insbesondere auch Fluoreszenzfarbstoffen, besprüht werden, die durch Kapillarkräfte in die Risse eindringen und somit beim nachfolgenden Befreien der Oberfläche von den Farbstoffen nicht mit entfernt werden. Die Risse sind somit über die abgelagerten Farbstoffe entweder sofort oder nach einer anschließenden Behandlung mit einem Entwickler und einer vorbestimmten Entwicklungszeit unter UV- oder sichtbarem Licht durch Inaugenscheinnahme oder durch eine automatische Bildverarbeitung erfassbar.
Der Einsatz des Farbeindringverfahrens ist bekannt zur Fehlerdetektion im Rahmen von Qualitätsprüfungen.

Der Erfindung liegt die Aufgabe zu Grunde, ein Verfahren zur Sichtbarmachung von laserinduzierten Rissspuren aufzuzeigen, bei dem der Istverlauf der Rissspur markiert wird, um anhand dessen nachfolgende Bearbeitungsschritte ausrichten zu können.

Es ist auch eine Aufgabe der Erfindung ein Verfahren vorzuschlagen, mit dem zur Prozesskontrolle die Rissspurerzeugung nachgewiesen werden kann.

Diese Aufgabe wird für ein Verfahren zur Erzeugung optisch wahrnehmbarer laserinduzierter Risse in spröde Materialien gemäß Anspruch 1 gelöst. Vorteilhafte Ausführungen sind in den Unteransprüchen beschrieben.

Es ist erfindungswesentlich, dass nach oder während der Rissentstehung entlang der Rissspur ein Markierungsmittel unmittelbar im Riss abgelagert wird, wodurch der reale Istverlauf der Rissspur sichtbar wird sowie bei transparentem Material auch die Risstiefe optisch wahrnehmbar wird.

Die Erfindung soll nachfolgend mittels einer Zeichnung anhand eines Ausführungsbeispiels näher erläutert werden. Hierzu zeigt:

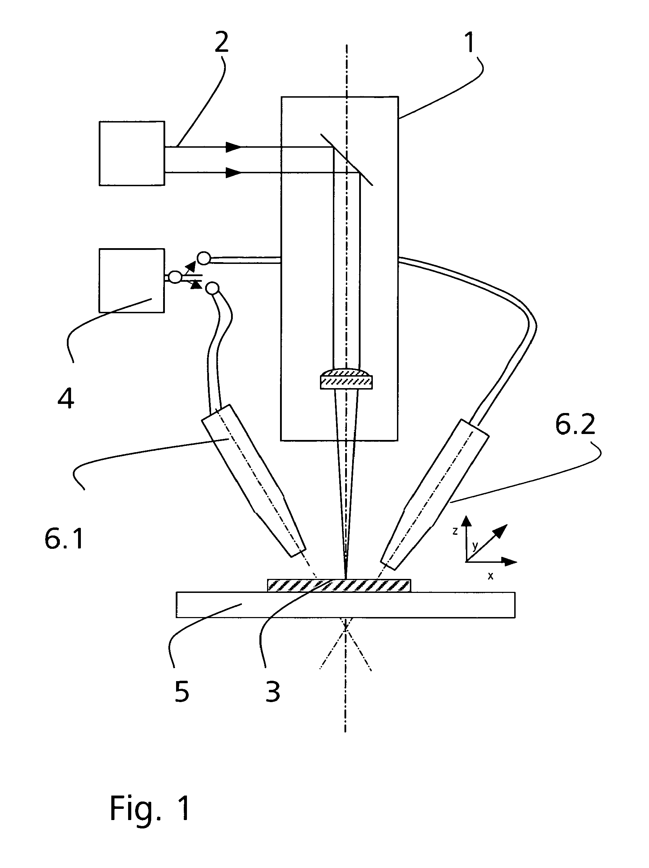

- Fig. 1: den Prinzipaufbau einer zur Durchführung des Verfahrens vorteilhaften Vorrichtung

Die in Fig. 1 dargestellte Vorrichtung umfasst einen Laserbearbeitungskopf 1, über den ein Laserstrahl 2 auf die Oberfläche eines Werkstückes 3 aus einem spröden Material, z. B. Keramik oder Glas gerichtet wird. Zur Erzeugung der notwendigen Relativbewegung zwischen dem Laserstrahl 2 und dem Werkstück 3 ist letztgenanntes auf einem Bewegungssystem 5 positioniert.

Darüber hinaus ist wenigstens eine mit einem Vorratsbehälter 4 verbundene Kühldüse 6.1, 6.2 vorhanden, die gleich dem Laserstrahl 2 ein Kühlmittelstrahl auf die Oberfläche des Werkstückes 3 richtet. Vorteilhaft sind zwei Kühlmitteldüsen 6.1, 6.2, um diese im Wechsel aktivieren zu können, wenn der Richtungssinn der Relativbewegung geändert wird.

Das TLS-Verfahren wird in an sich bekannter Weise durchgeführt, d. h. beginnend von einem Initialriss wird der Laserstrahl 2, gefolgt vom Kühlmittelstrahl, entlang der gewünschten Trennlinie geführt, sodass entlang dieser Trennlinie eine Rissspur erzeugt wird, die sich in eine Tiefe des Werkstückes 3 erstreckt, abhängig von den Materialparametern, insbesondere der Werkstückdicke und den Prozessparametern des Verfahrens.

Um die entstehende Rissspur optisch sichtbar zu machen, wird dem Kühlmittel eine Farbstoff beinhaltende chemische Substanz (Markierungsmittel) beigesetzt, die mit der Rissausbreitung in den Riss gezogen wird. Die sich dann im Riss ablagernden Farbstoffe werden mit dem nachfolgenden Reinigen der Werkstückoberfläche nicht mit entfernt, sodass der Riss in seinem Verlauf (Rissspur) und sofern das Material im sichtbaren Bereich transparent ist, auch in seiner Tiefe erkennbar wird. Es liegt auf der Hand, dass die Farbstoffe im Spektralbereich der Betrachtung von der Farbe des Materials unterschiedlich sein müssen.

Ein Aussetzen der Rissspur oder die Schwankung der Risstiefe können somit festgestellt werden, womit eine 100 %ige Prozesskontrolle möglich ist.
An Hand des optisch erkennbaren Risses können nachfolgende Bearbeitungsschritte an dessen tatsächlichen Istverlaufes (Rissspur) ausgerichtet werden.

Das Beimischen des Markierungsmittels in das Kühlmittel ist besonders vorteilhaft, da hier bereits mit Rissentstehung das Markierungsmittel förmlich eingesaugt wird. Außerdem ist kein zusätzlicher Verfahrensschritt zur Markierung notwendig und es bedarf auch keines zusätzlichen apparativen Aufwandes.

Als Kühlmittel wird für TLS-Verfahren üblicherweise gereinigtes Wasser mit bestimmten Zusätzen zur Prozessoptimierung verwendet.

Als Markierungsmittel können handelsübliche Rissprüfmittel für die zerstörungsfreie Rissprüfung zum Einsatz kommen.
Über das Mischungsverhältnis von Kühlmittel und Markierungsmittel ist die Intensität der Einfärbung und damit die Risssichtbarkeit und deren Dauerhaftigkeit einstellbar.

Alternativ zur Beigabe des Markierungsmittels zum Kühlmittel kann das Markierungsmittel auch in einem gesonderten Verfahrensschritt, z. B. durch Tauchen, Sprühen oder Streichen aufgetragen werden. Durch den zusätzlichen Verfahrensschritt wird jedoch die Prozessdauer insgesamt verlängert.

Dem Fachmann auf dem Gebiet dieser Erfindung erschließt sich, dass die Erfindung nicht auf die Einzelheiten der vorstehend beispielhaft angeführten Ausführungsformen beschränkt ist, sondern dass die vorliegende Erfindung in anderen speziellen Formen verkörpert sein kann, ohne vom Umfang der Erfindung abzuweichen, die durch die anliegenden Ansprüche festgelegt ist.

## Patentansprüche

1. Verfahren zur Erzeugung optisch wahrnehmbarer laserinduzierter Risse in sprödes Material, bei dem eine Laserstrahlung gefolgt von einem Kühlmittelstrahl zur Oberfläche des spröden Materials relativ geführt wird, um von einem Initialriss ausgehend, eine Rissspur in das Material zu treiben und bei dem durch Auftragen eines Markierungsmittels auf die Oberfläche des Materials im Bereich der Rissspur die Rissspur optisch sichtbar gemacht wird **dadurch gekennzeichnet,**
**dass** das Markierungsmittel in den Riss eindringt und anschließend von der Oberfläche wieder entfernt wird, sodass ausschließlich das in den Riss eingedrungene Markierungsmittel haften bleibt.

2. Verfahren nach Anspruch 1, **dadurch gekennzeichnet,**
**dass** das Auftragen des Markierungsmittels durch Tauchen des Materials in das Markierungsmittel im Anschluss an die Erzeugung der Rissspur erfolgt.

3. Verfahren nach Anspruch 1, **dadurch gekennzeichnet,**
**dass** das Auftragen des Markierungsmittels durch Aufsprühen auf das Material erfolgt.

4. Verfahren nach Anspruch 3, **dadurch gekennzeichnet,**
**dass** das Aufsprühen während der Risserzeugung erfolgt, indem das Markierungsmittel dem Kühlmittel beigemischt ist.

5. Verfahren nach Anspruch 1, **dadurch gekennzeichnet,**
**dass** als Markierungsmittel ein für die zerstörungsfreie Oberflächenrissprüfung handelsübliches Rissprüfmittel verwendet wird.
